# EUROPÄISCHE PATENTSCHRIFT

(11) **EP 1 701 887 B1**
(45) Veröffentlichungstag und Bekanntmachung des Hinweises auf die Patenterteilung: **18.06.2008**
(21) Anmeldenummer: 04796932.4
(22) Anmeldetag: 04.11.2004
(51) Int. Cl.: B65B 41/12, B65H 19/18, B29C 65/18

(54) **VERFAHREN ZUM WECHSELN VON SCHLAUCHROLLEN**
METHOD FOR CHANGING ROLLS OF TUBULAR FILM
PROCEDE POUR CHANGER DES ROULEAUX DE FILM TUBULAIRE

(30) Priorität: 04.11.2003 AT 17482003; 22.07.2004 AT 12512004
(43) Veröffentlichungstag der Anmeldung: 20.09.2006
(73) Patentinhaber: Deininger, Karl, 8680 Mürzzuschlag (AT)
(72) Erfinder: Deininger, Karl, 8680 Mürzzuschlag (AT)
(74) Vertreter: Henhapel, Bernhard
(86) Internationale Anmeldenummer: PCT/AT2004/000387
(87) Internationale Veröffentlichungsnummer: WO 2005/042347

(56) Entgegenhaltungen:
- EP-A- 1 201 585
- EP-A- 1 304 214
- GB-A- 872 873
- US-A- 5 679 207

## Beschreibung

Die Erfindung bezieht sich auf ein Verfahren zum Verbinden eines Anfangsabschnittes eines auf einem Rollenträger bandförmig aufgewickelten Folienschlauches mit einem Endabschnitt eines zweiten Folienschlauches, insbesondere für Verpackungsanlagen, gemäß dem Oberbegriff von Anspruch 1 sowie eine Verpackungsanlage gemäß dem Oberbegriff von Anspruch 8.

Folienschläuche sind in der Regel auf Rollenträger aufgewickelt, die drehbar gelagert sind und von denen der Folienschlauch abgewickelt und weiteren Verarbeitungsschritten zugeführt wird. Ein auf einem Rollenträger aufgewickelter Folienschlauch wird im Folgenden auch als Schlauchrolle bezeichnet. Folienschläuche werden in Verpackungsanlagen in vielfältiger Weise verwendet, etwa in Absackanlagen zum Verpacken von Gütern in Säcken, oder in Palletieranlagen zum Umspannen von auf Paletten gelagerten Gütern.

In Absackanlagen etwa wird von einer solchen Schlauchrolle der Folienschlauch abgewickelt und in folgenden Anlagenabschnitten mit Material befüllt. Dazu muss der zunächst bandförmig vorliegende Folienschlauch geöffnet werden, um seine Befüllung zu ermöglichen. Das erfolgt etwa mithilfe eines Dorns, der in axialer Richtung innerhalb des Folienschlauches positioniert ist, sodass der Folienschlauch beim Passieren des Dorns geöffnet wird. Eine solche Konfiguration wird auch als "fliegender Dorn" bezeichnet, da der Dorn im Inneren des Folienschlauches in stabiler Lagerung gehalten werden muss. Alternativ zu einem solchen fliegenden Dorn finden auch Keile bzw. Schwerter oder Vakuumsauger Verwendung, insbesondere bei der Verarbeitung von Seitenfaltenschläuchen.

Die mithilfe des Dorns geschaffene Öffnung des Folienschlauches steht nun zur Befüllung mit Gütern etwa in Absackanlagen oder zur Umhüllung von Gütern etwa in Palletieranlagen zur Verfügung. In Absackanlagen wird der betreffende Folienschlauchabschnitt beidseitig des eingefüllten Materials z.B. mithilfe spezieller Schweißverfahren verschlossen, und das abgepackte Gut kann abtransportiert werden.

Dabei stellt sich insbesondere das Problem des Rollenträgerwechsels bei vollständigem Verbrauch eines auf dem Rollenträger aufgewickelten Folienschlauches. In herkömmlicher Weise wird hierzu die Verpackungsanlage gestoppt, der Rollenträger der verbrauchten Schlauchrolle entfernt und stattdessen eine neue Schlauchrolle bereitgestellt. Der Anfangsabschnitt der neuen Schlauchrolle wird in weiterer Folge händisch in einer der Schlauchrolle unmittelbar nachfolgenden Positionier- und Spannstation eingesetzt und den weiteren Anlagenabschnitten zugeführt. Insbesondere wird der Dorn bzw. Keil in den Anfangsabschnitt der neuen Schlauchrolle manuell eingeführt. Erst wenn der Dorn bzw. Keil eingesetzt wurde, kann die Verpackungsanlage wieder gestartet werden.

Der Wechsel eines Rollenträgers bedingt somit längere Stillstandszeiten der Gesamtanlage. Dabei ist zu bemerken, dass Schlauchrollen in der Regel etwa 1800 Säcke aufweisen, die Verarbeitungsgeschwindigkeit von Absackanlagen aber bei etwa 1800-2400 Säcken pro Stunde liegt. Somit ist in weniger als 1 Stunde eine Schlauchrolle aufgebraucht. Der Wechsel der Schlauchrolle nimmt aber etwa 10-20 Minuten in Anspruch. Die Absackanlage steht daher während ihres Betriebs bis zu einem Drittel ihrer Betriebsdauer still. Dabei bewirken zunehmende Verarbeitungsgeschwindigkeiten für Folienschläuche eine zunehmende Verschlechterung des Verhältnisses zwischen Arbeitszeit und Stillstandszeit der Anlage.

Daher wurde vorgeschlagen, die Folienschläuche von Herstellerseite nicht auf Rollenträger aufzuwickeln, sondern spezielle Behältnisse vorzusehen, in denen das bandförmige Verpackungsmaterial gefaltet angeordnet ist, sodass während einer Zufuhr des ersten Endes zur Verpackungsanlage das zweite Ende des bandförmigen Verpackungsmaterials zumindest zeitweise ruht und von außerhalb des Behältnisses zugänglich ist. Dadurch ist es etwa während der Zufuhr des ersten Endes möglich, mit dem anderen Ende zu hantieren und es insbesondere mit einem Ende eines bandförmigen Verpackungsmaterials eines nachfolgenden, zweiten Behältnisses zu verbinden. Somit wird bei vollständiger Entnahme des Verpackungsmaterials aus dem ersten Behältnis automatisch die Entnahme aus dem zweiten Behältnis gestartet. Bereits beim Anfahren der Verpackungsanlage können zwei Enden von Verpackungsmaterial, die sich in zwei aufeinanderfolgenden Behältnissen befinden, miteinander verbunden werden, sodass je nach Anzahl der beteiligten Behältnisse ein beliebiger Vorrat an Verpackungsmaterial zur Verfügung steht, ohne dass die Verpackungsanlage gestoppt werden müsste.

Für die gefaltete Anordnung des bandförmigen Verpackungsmaterials wurden unterschiedliche Möglichkeiten vorgeschlagen, so kann die gefaltete Anordnung in Form eines Stapels erfolgen, bei dem jeweils zwei an eine Faltkante angrenzende Stapelebenen des bandförmigen Verpackungsmaterials im wesentlichen horizontal aufeinander liegen. Das erste Ende des bandförmigen Verpackungsmaterials kann in diesem Fall an die oberste Stapelebene angrenzen, und das zweite Ende das bandförmigen Verpackungsmaterials an die unterste Stapelebene, sodass beginnend mit dem der Verarbeitungsanlage zugeführten Ende des Verpackungsmaterials das Material vom oberen Bereich des Stapels abgenommen wird. Das zuletzt der Verarbeitungsanlage zugeführte Ende kann etwa von unten entlang einer seitlichen Begrenzung des Behältnisses bis in den Bereich der obersten Stapelebene hochgezogen sein, wo es etwa über die obere Begrenzung des Behälters hervorragt. Alternativ hierzu kann aber auch im unteren Bereich des Behältnisses eine Entnahmeöffnung für das zweite Ende vorgesehen sein. Diese Maßnahmen sind aber nur in jenen Fällen möglich, wo das bandförmige Verpackungsmaterial tatsächlich in gefalteter Anordnung vorliegt.

In der EP 1 201 585 A1 wurde daher vorgeschlagen, den Anfangsabschnitt einer neuen Schlauchrolle trapezförmig zuzuschneiden, die so gebildeten Lappen über den Endabschnitt einer nicht weiter zugeschnittenen, alten Schlauchrolle zu legen, und sie gemeinsam zu verbinden. Da der Endabschnitt der alten Schlauchrolle gemäß der EP 1 201 585 A1 nicht trapezförmig zur Bildung aufklappbarer Lappen zugeschnitten wird, kann die Erstellung einer zugfesten Verbindung etwa durch Verschweißen nur erfolgen, indem innerhalb des ablaufenden Folienschlauches ein Gegenlager geführt wird. Dieses Gegenlager muss innerhalb des ablaufenden Folienschlauches aber auch in Position gehalten werden, wozu die EP 1 201 585 A1 Führungsrollen vorsieht. Eine Anordnung dieser Art, bei der ein innerhalb des ablaufenden Folienschlauches permanent über Führungsrollen geführtes Gegenlager vorgesehen ist, bringt aber zumindest zwei gravierende Nachteile mit sich. Zum einen müssen insbesondere die Führungsrollen innerhalb des ablaufenden Folienschlauches geschmiert werden, sodass ein Einsatz des Verfahrens gemäß der EP 1 201 585 A1 etwa für Absackanlagen für Lebens- bzw. Futtermittel bedenklich ist. Zum anderen wird durch ein Verfahren gemäß der EP 1 201 585 A1 die Folienbandgeschwindigkeit entscheidend beschränkt, da der Wärmeübertrag auf das innerhalb des ablaufenden Folienschlauches geführten Gegenlagers ansonsten zu groß wäre. Insbesondere würde örtlich die Plastizitätsgrenze der üblicherweise für Folienschläuche verwendeten Kunststoffe erreicht, sodass es etwa bei Folienstillstand zwangsläufig zu ungewollten Verschweißungen zwischen dem Gegenlager bzw. dessen Führungsrollen und der Folie kommen kann.

Es wurde daher in weiterer Folge vorgeschlagen, durch Schnittsetzung beim Anfangsabschnitt sowie beim Endabschnitt jeweils einen aufklappbaren Lappen zu bilden, der jeweils im Bereich der Längsachse, also in den zentrischen Bereichen des jeweiligen Folienschlauches, angeordnet ist. Die Lappen werden übereinandergelegt und zugfest miteinander verbunden. Der zur Herstellung einer zugfesten Verbindung durch Verschweißen notwendige Schweißamboss kann somit seitlich in die zentrischen Bereiche der zu verbindenden Folienschläuche eingeschoben werden, um die zentrisch angeordneten Lappen auflegen und verschweißen zu können.

Um solche Lappen zu erzeugen, müssen aber die Randbereiche schräg zur Längsachse des Folienschlauches abgeschnitten werden, sodass sich Anfangs- und Endabschnitt endseitig verjüngen, etwa in einer trapezförmigen Weise. Eine solche Art der Verbindung ist zwar prinzipiell für jede Art von Folienschläuchen anwendbar, insbesondere bei Seitenfaltenschläuchen kann es aber zu Nachteilen kommen, da bei Seitenfaltenschläuchen oft sogenannte Seitenkeile bzw. -schwerter verwendet werden. Diese Seitenkeile bzw. -schwerter greifen in die Seitenfalten ein und dienen etwa zum Aufweiten des Folienschlauches. Bei der soeben beschriebenen Verbindungsart kann es somit aufgrund der Lückenbildung in den Randbereichen der Folienschläuche an den Verbindungsstellen zu einem Ausfädeln der Seitenkeile bzw. -schwerter kommen.

In der EP 1 304 214 ist ein Verfahren zum Verbinden zweier Enden von flachliegenden und mit Seitenfalten versehenen Schlauchfolienbahnen gemäß dem Oberbegriff des Anspruchs 1 beschrieben, bei dem ein Ende mit die Innenkanten der Seitenfalten auftrennenden Schnitten versehen und das andere Ende in den aufgetrennten Bereich eingeschoben wird, wobei die Enden sodann durch eine Querschweißnaht miteinander verbunden werden. Auch bei dieser Ausführungsform ist daher die Verwendung eines fliegenden Dorns nicht möglich.

Aus der GB 872 873 ist eine Verpackungsanlage gemäß dem Oberbegriff des Anspruchs 8 bekannt.

Es ist daher das Ziel der Erfindung, längere Stillstandszeiten der Gesamtanlage bei einem Wechsel der Schlauchrolle zu vermeiden. Insbesondere ist es das Ziel, dass nach dem Verbinden des alten mit dem neuen Folienschlauch wiederum ein Schlauch entsteht, dessen Öffnungsquerschnitt an der Verbindungsstelle nicht oder nur unwesentlich vermindert wird. Die Erfindung soll sich dabei insbesondere auf Seitenfaltenschläuche beziehen, bei denen der bandförmige Anfangsabschnitt sowie wahlweise der bandförmige Endabschnitt in seinen Randbereichen jeweils eine in Längsrichtung des Folienschlauches verlaufende, nach innen gerichtete Seitenfalte aufweist Dieses Ziel wird durch die kennzeichnenden Merkmale von Anspruch 1 bzw. 8 erreicht.

Anspruch 1 bezieht sich hierbei auf ein Verfahren zum Verbinden eines Anfangsabschnittes eines auf einem Rollenträger bandförmig aufgewickelten Folienschlauches mit einem Endabschnitt eines zweiten, sich über nachfolgende Verarbeitungsstationen, insbesondere einer Verpackungsanlage, zumindest teilweise bandförmig erstreckenden Folienschlauches, wobei der bandförmige Anfangs- und Endabschnitt jeweils zwei übereinanderliegende, äußere Seitenflächen aufweisen, die in deren Randbereichen jeweils in zwei dazwischen liegende, nach innen gefaltete, innere Seitenflächen übergehen, die somit eine innen liegenden Faltenachse bilden. Erfindungsgemäß ist nun vorgesehen, dass in den beiden äußeren Randbereichen des Endabschnittes durch Schnittsetzung jeweils ein Lappen gebildet wird, der mit dem gegenüberliegenden Anfangsabschnitt zugfest verbunden wird, wobei der Anfangsabschnitt den Endabschnitt übergreift, und die Schnittsetzung beim Endabschnitt so erfolgt, dass jeweils ein in Längsrichtung des Folienschlauches abstehender Lappen in den Randbereichen des Endabschnittes gebildet wird, der jeweils zwischen die inneren Seitenflächen des Anfangsabschnittes eingeschoben und mit dem Anfangsabschnitt zugfest verbunden wird. Dadurch wird erreicht, dass der Folienschlauch der verbrauchten Schlauchrolle gemeinsam mit dem Folienschlauch der neuen Schlauchrolle wieder einen annähernd kontinuierlichen Folienschlauch bildet, der sich über die Gesamtanlage erstreckt. Hierzu ist es nicht notwendig, dass der Verbindungsabschnitt einen dichten Schlauchabschnitt bildet, da der Verbindungsabschnitt nicht unbedingt für die Befüllung verwendet werden muss. Er muss aber eine zugfeste Verbindung darstellen, damit die beiden verbundenen Folienschläuche problemlos durch die weiteren Anlagenabschnitte geführt werden können und insbesondere der Dorn vom alten Folienschlauch in den neuen Folienschlauch problemlos übergeführt werden kann. Insbesondere stellt das erfindungsgemäße Verfahren sicher, dass nach dem Verbinden der beiden Folienschläuche wieder ein Schlauch entsteht, dessen Öffnungsquerschnitt an der Verbindungsstelle nicht oder nur unwesentlich vermindert wird.

Bei der Verwendung von Seitenfaltensäcken bietet somit das erfindungsgemäße Verfahren Vorteile, da die Lappen in den beiden äußeren Randbereichen des Anfangs- oder Endabschnittes gebildet werden und dort auch zugfest miteinander verbunden werden. Ein in die Seitenfalte eingesetzter Seitenkeil bzw. Schwert wird somit auch an der Verbindungsstelle zweier Folienschläuche nicht ausfädeln. Dazu ist es lediglich notwendig, entweder am Anfangsabschnitt oder am Endabschnitt durch Schnittsetzung einen Lappen zu bilden, nicht jedoch unbedingt an beiden Abschnitten. Da aber bei dieser Verbindungsart keine zugfeste Verbindung in den zentrischen Bereichen der Folienschläuche erfolgt, ist es notwendig, dass der Anfangsabschnitt den Endabschnitt übergreift, sodass sowohl ein fliegender Dorn als auch der Seitenkeil bzw. das Schwert sicher vom Endabschnitt zum Anfangsabschnitt übergeführt werden.

Insbesondere kann die Schnittsetzung beim Endabschnitt gemäß Anspruch 2 so erfolgen, dass in den Randbereichen des Endabschnittes jeweils in Längsrichtung des Folienschlauches verlaufende Schlitze gebildet werden, in die die jeweiligen inneren Seitenflächen des Anfangsabschnittes entlang ihrer Faltenachse eingeführt werden. Es wäre immerhin auch denkbar, nicht nur Schlitze zu bilden und auf diese Weise Lappen in den Randbereichen des Endabschnittes zu erzeugen, sondern ein Stück des gesamten zentrischen Bereiches des Endabschnittes herauszuschneiden.

In vorteilhafter Weise kann gemäß Anspruch 3 vorgesehen sein, dass die Breite der Lappen der Breite der jeweiligen inneren Seitenflächen des Anfangsabschnittes im Wesentlichen entspricht.

Gemäß Anspruch 4 ist vorgesehen, dass die zugfeste Verbindung der Anfangs- und Endabschnitte der Folienschläuche durch Verschweißen gebildet wird. Insbesondere haben sich hierzu gemäß Anspruch 5 Schweißverfahren auf der Basis von Ultraschall als vorteilhaft erwiesen.

Vor dem Übereinanderlegen von Anfangs- und Endabschnitt ist es gemäß Anspruch 6 vorteilhaft, wenn der Anfangsabschnitt mittels Unterdruck oder elektrostatischer Verfahren aufgeweitet wird.

Wie bereits erwähnt wurde, werden bevorzugt Schweißverfahren zum Herstellen einer zugfesten Verbindung verwendet. Eine vorteilhafter Arbeitsvorgang wird in Anspruch 7 festgelegt, dem zu Folge zum Verschweißen der Anfangs- und Endabschnitte der Folienschläuche seitlich jeweils ein Schweißamboss zwischen die inneren Seitenflächen eingeschoben wird, auf dem jeweils ein Lappen sowie jeweils ein Randbereich des Anfangs- oder Endabschnittes aufgelegt und miteinander verschweißt werden.

Anspruch 8 bezieht sich auf eine Verpackungsanlage mit einem Rollenträger, auf dem ein Folienschlauch aufgewickelt ist, einer Positionier- und Spannstation, die den Folienschlauch vom Rollenträger abwickelt und nachfolgenden Anlagenabschnitten zuführt, einer Verpackungseinheit zum Verarbeiten eines Folienschlauchabschnittes sowie einer Fördereinrichtung zum Abtransport verpackter Güter. Hierbei ist zur Durchführung des Verfahrens nach einem der Ansprüche 1 bis 7 vorgesehen, dass zwischen der Positionier- und Spannstation sowie der Verpackungseinheit zumindest eine Schneidvorrichtung zur Bildung jeweils eines in Längsrichtung eines ablaufenden Folienschlauches abstehenden Lappens in den Randbereichen des Endabschnittes und eine Verschweißstation zur Verbindung des zwischen die inneren Seitenflächen des Anfangsabschnittes eingeschobenen abstehenden Lappens mit dem Anfangsabschnitt angeordnet ist.

Die Verschweißstation dient für die Herstellung einer zugfesten Verbindung. Gemäß Anspruch 9 handelt es sich hierbei um eine Ultraschall-Schweißanlage. Gemäß Anspruch 10 sind zwischen der Positionier- und Spannstation sowie der Verpackungseinheit Saugschwenker angeordnet.

Die Erfindung wird nun anhand der beiliegenden Figuren näher erläutert. Es zeigen hierbei
Fig. 1a eine schematische Darstellung einer Verpackungsanlage mit fliegendem Dorn gemäß dem Stand der Technik,
Fig. 1b eine schematische Darstellung einer Verpackungsanlage mit Vakuumsaugern gemäß dem Stand der Technik,
Fig. 1c eine schematische Darstellung einer Verpackungsanlage mit Seitenkeil gemäß dem Stand der Technik,
Fig. 1d eine schematische Darstellung eines Anlagenabschnittes zur erfindungsgemäßen Verbindungserstellung für eine Verpackungsanlage,
Fig. 2a eine schematische Darstellung eines Teilabschnittes einer Verpackungsanlage im Aufriss, in dem ein erster Schritt des erfindungsgemäßen Verbindungsverfahrens gezeigt ist, bei dem das Endstück einer verbrauchten Schlauchrolle vom Folienschlauch derselben Rolle, der sich über nachfolgende Verarbeitungsstationen erstreckt, abgeschnitten wird,
Fig. 2b die schematische Darstellung gemäß Fig. 2a von oben gesehen, wobei die obere Darstellung die verbrauchte Schlauchrolle zeigt, und die untere Darstellung die neue Schlauchrolle,
Fig. 3a eine schematische Darstellung eines Teilabschnittes einer Verpackungsanlage im Aufriss, in dem ein weiterer Schritt des erfindungsgemäßen Verbindungsverfahrens gezeigt ist, bei dem Anfangs- und Endabschnitt miteinander verschweißt werden,
Fig. 3b die schematische Darstellung gemäß Fig. 3a von oben gesehen, wobei die obere Darstellung die verbrauchte Schlauchrolle zeigt, und die untere Darstellung die neue Schlauchrolle,
Fig. 4 eine schematische Darstellung des Anfangsabschnittes entlang der Längsachse des neuen Folienschlauches gesehen,
Fig. 5 eine schematische Darstellung von Anfangs- und Endabschnitt von oben gesehen, wobei der Endabschnitt gemäß eines Schrittes einer weiteren Ausführungsform des erfindungsgemäßen Verfahrens mit Schlitzen in Richtung der Längsachse versehen wurde,
Fig. 6 eine schematische Darstellung von Anfangs- und Endabschnitt von oben gesehen, wobei der Endabschnitt gemäß eines weiteren Schrittes der Ausführungsform des erfindungsgemäßen Verfahrens gemäß Fig. 5 in den Anfangsabschnitt eingeschoben wurde,
Fig. 7 eine schematische Darstellung von Anfangs- und Endabschnitt von oben gesehen, wobei der Endabschnitt gemäß eines weiteren Schrittes der Ausführungsform des erfindungsgemäßen Verfahrens gemäß Fig. 5 mit dem Anfangsabschnitt verschweißt wurde,
Fig. 8 eine perspektivische Ansicht gemäß Fig. 7,
Fig. 9 die perspektivische Ansicht gemäß Fig. 8 von unten gesehen,
Fig. 10 eine Detailansicht des markierten Bereiches gemäß Fig. 8, und
Fig. 11 eine perspektivische Darstellung des Endabschnittes, der gemäß eines Schrittes einer Ausführungsform des erfindungsgemäßen Verfahrens gemäß Fig. 5 mit Schlitzen in Richtung der Längsachse versehen wurde.

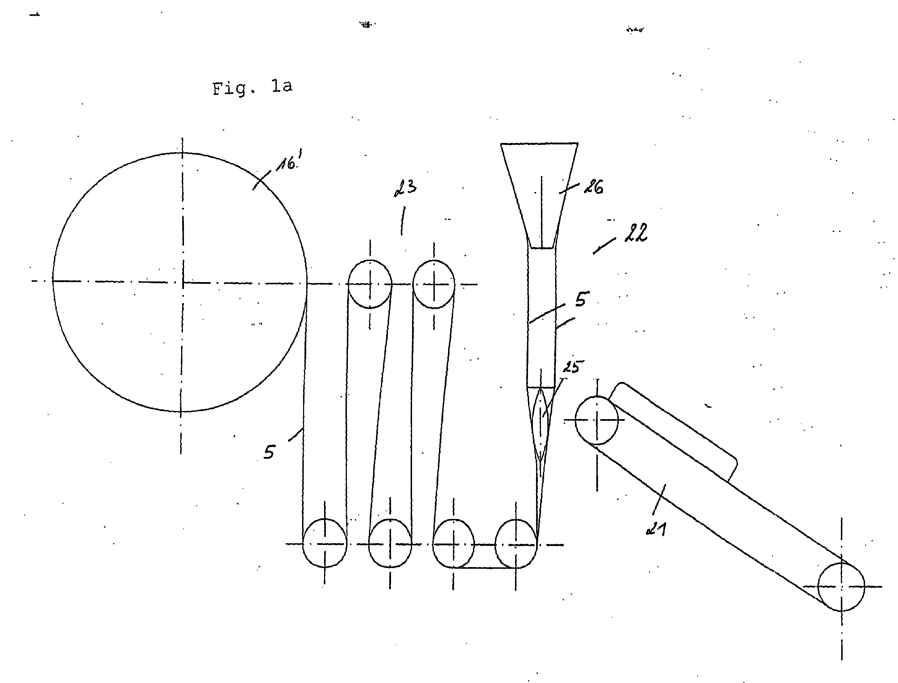

Fig. 1a-c zeigt eine schematische Darstellung einer herkömmlichen Absackanlage mit einer Schlauchrolle 16', einer Spann- und Puffereinheit 23, einer Befüllungs- bzw. Verpackungseinheit 22 sowie einem Förderer 21. In der Befüllungs- bzw. Verpackungseinheit 22 ist es vor dem Befüllen erforderlich, den Folienschlauch 5 zu öffnen, was mithilfe eines in den Folienschlauch 5 eingesetzten Dorns 25 bewerkstelligt wird. Der Folienschlauch 5 kann nun etwa über einen Fülltrichter 26 befüllt werden. Beiderseitig des befüllten Abschnittes wird der Folienschlauch 5 abgeschnitten und die Enden verschweißt. Das abgepackte Gut kann in weiterer Folge vom Förderer 21 abtransportiert werden. Die Arbeitsschritte in solchen Anlagen verlaufen automatisiert und werden von Anlagensteuerungssystemen gesteuert.

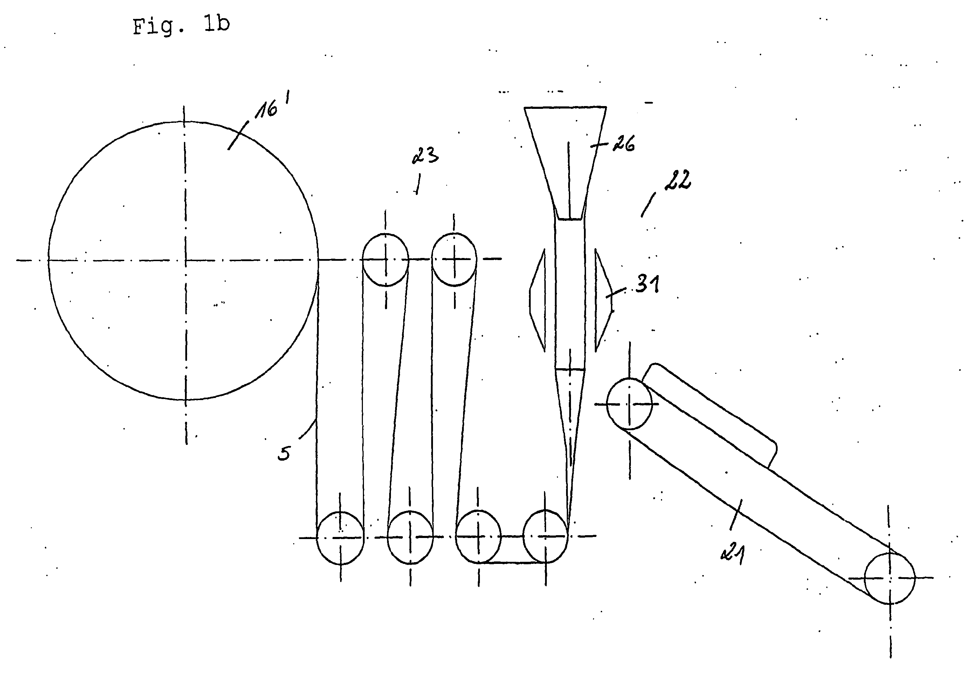

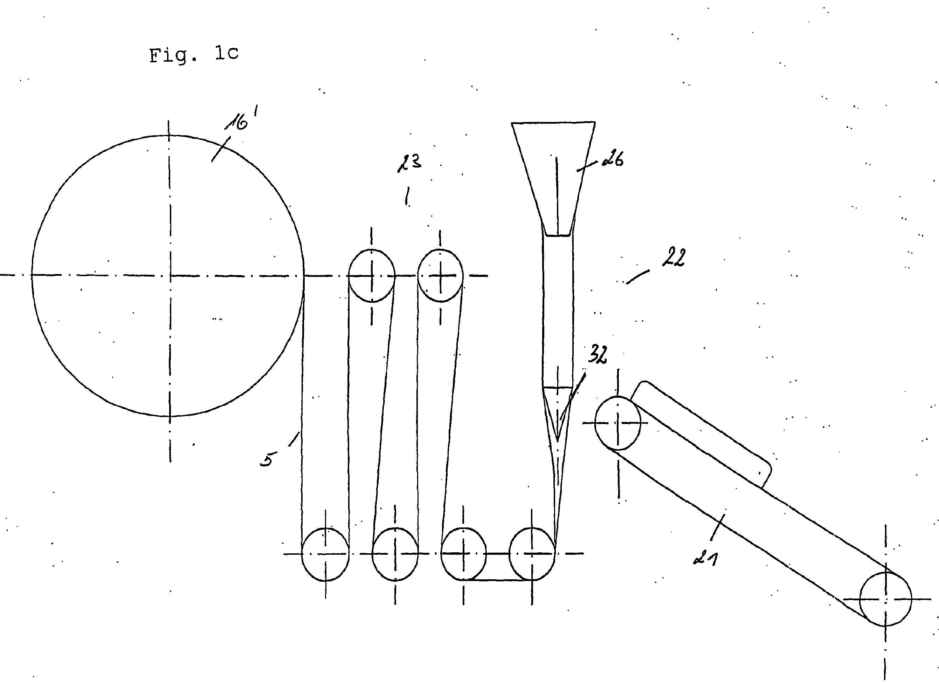

Fig. 1b zeigt eine weitere Ausführungsvariante einer herkömmlichen Absackanlage, bei der anstelle des Dorns 25 Vakuumsauger 31 zum Öffnen des Folienschlauches 5 verwendet werden, was sich insbesondere bei Schlitzfaltensäcken empfiehlt. In Fig. 1c wird schematisch die Verwendung eines Seitenkeils bzw. Schwerts 32 gezeigt. Bei all diesen Ausführungsvarianten stellt sich das Problem des Rollenträgerwechsels bei vollständigem Verbrauch eines auf dem Rollenträger 1 aufgewickelten Folienschlauches 5. In herkömmlicher Weise wird hierzu die Verpackungsanlage gestoppt, der Rollenträger 1 der verbrauchten Schlauchrolle 16' entfernt und stattdessen eine neue Schlauchrolle 16 bereitgestellt. Der Anfangsabschnitt der neuen Schlauchrolle 16 wird in weiterer Folge händisch in einer der Schlauchrolle 16 unmittelbar nachfolgenden Spann- und Puffereinheit 23 eingesetzt und den weiteren Anlagenabschnitten zugeführt. Insbesondere wird der Dorn 25 bzw. Keil 32 in den Anfangsabschnitt der neuen Schlauchrolle 16 manuell eingeführt. Erst wenn der Dorn 25 bzw. Keil 32 eingesetzt wurde, kann die Verpackungsanlage wieder gestartet werden, was längere Stillstandszeiten der Gesamtanlage bedingt.

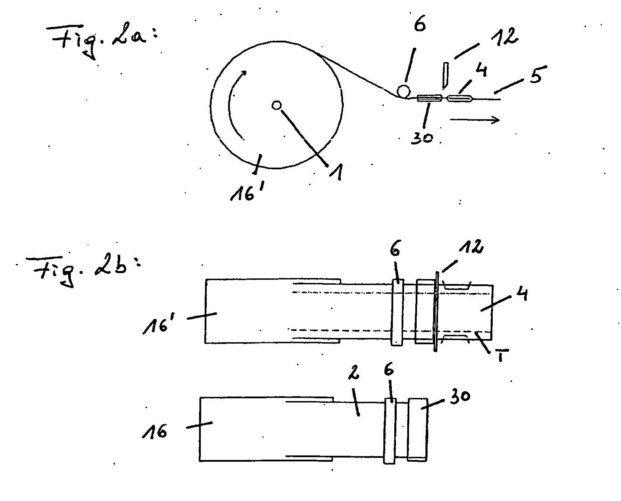

Diese Stillstandszeiten können erfindungsgemäß durch Anordnung einer Schneidvorrichtung 12, 28 sowie einer Verschweißstation 13 vermieden werden, wie anhand der folgenden Fig. 2 bis 11 erläutert wird.

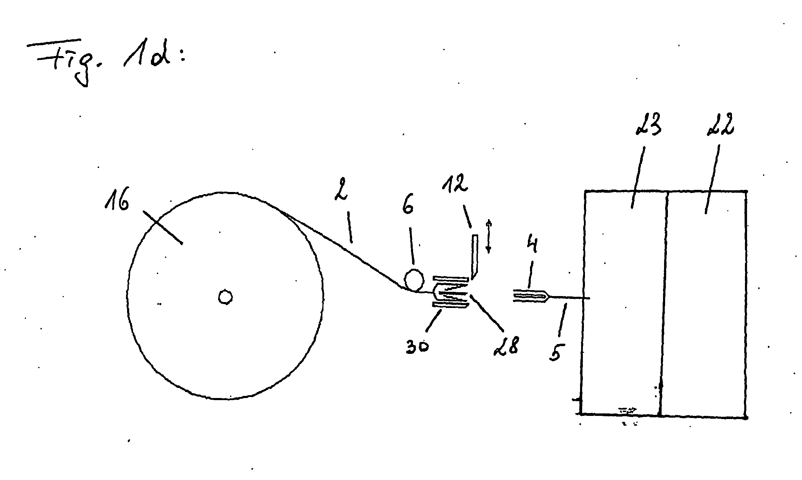

Fig. 1d zeigt zunächst schematisch eine Übersicht über die Gesamtanlage mit dem neuen Folienschlauch 2, der auf der neuen Schlauchrolle 16 bandförmig aufgewickelt ist, Schneidvorrichtungen 12, 28, Verschweißstation 13 (in Fig. 1d nicht eingezeichnet), Puffereinheit 23 und der Verpackungseinheit 22. Bei der Befüllungs- bzw. Verpackungseinheit 22 kann es sich etwa um eine Befüllungseinheit einer Absackanlage handeln, oder um eine Verpackungseinheit zum Umhüllen von Paletten mithilfe eines Folienschlauches 2, 5. Im Unterschied zu herkömmlichen Anlagen gemäß Fig. 1a-c sind erfindungsgemäß zwischen der Spann- und Positioniereinheit 6 sowie der Puffereinheit 23 Schneidvorrichtungen 12, 28 und eine Verschweißstation 13 vorgesehen.

Die neue Schlauchrolle 16 wird von einem Rollenmagazin herangeführt, für das unterschiedliche Ausführungsvarianten denkbar sind. So kann ein Linearrollenmagazin vorgesehen sein, bei dem die Schlauchrollen 16 koaxial ausgerichtet sind und nacheinander einem Wechsler zugeführt werden. Der Wechsler entnimmt eine Schlauchrolle 16 dem Linearrollenmagazin und positioniert sie gegenüber den übrigen Anlagenabschnitten 22, 23 so, dass der Anfangsabschnitt 3 der neuen Schlauchrolle 16 den übrigen Anlagenabschnitten 22, 23 zugeführt werden kann. Gemäß einer alternativen Ausführungsform eines Rollenmagazins kann auch ein Karussellrollenmagazin vorgesehen sein, bei der die Schlauchrollen 16 kreisförmig angeordnet sind. Des Weiteren ist auch ein Paternoster-Aufzug denkbar, sodass die Schlauchrollen 16 auch in einer senkrechten Richtung bewegbar sind.

Der Anfangsabschnitt 3 des neuen Folienschlauches 2 einer neuen Schlauchrolle 16 wird in einer Zuführeinrichtung des Wechslers so positioniert und fixiert, dass der Anfangsabschnitt 3 in definierter Lage herabhängt, wobei er gegen elektromagnetische Störeinflüsse gut geschützt ist. Der Anfangsabschnitt 3 wird in weiterer Folge von den Spann- und Zuführrollen 6 erfasst (Fig. 2).

Während dieses Arbeitsschrittes wird der Endabschnitt 4 des alten Folienschlauches 5 pneumatisch erfasst und gegebenenfalls abgeschnitten.

Fig. 2a zeigt hierbei eine schematische Darstellung eines Teilabschnittes einer Verpackungsanlage im Aufriss, bei dem das Endstück einer verbrauchten Schlauchrolle 16' vom Folienschlauch 5 derselben Rolle, der sich über nachfolgende Verarbeitungsstationen erstreckt, mithilfe eines Schneidelements 12 abgeschnitten wird. Dadurch wird der Endabschnitt 4 des Folienschlauches 5 gebildet. Der Folienschlauch 5 wird dabei über eine Positionier- und Spannstation 6, die den Folienschlauch 5 vom Rollenträger 1 abwickelt, nachfolgenden Anlagenabschnitten zugeführt. Beim Folienschlauch 5 handelt es sich dabei um einen Seitenfaltenschlauch 5 mit der innen liegenden Faltenachse T. Fig. 2b zeigt die schematische Darstellung gemäß Fig. 2a von oben gesehen, wobei die obere Darstellung die verbrauchte Schlauchrolle 16' zeigt, und die untere Darstellung die neue Schlauchrolle 16 mit dem neuen Folienschlauch 2.

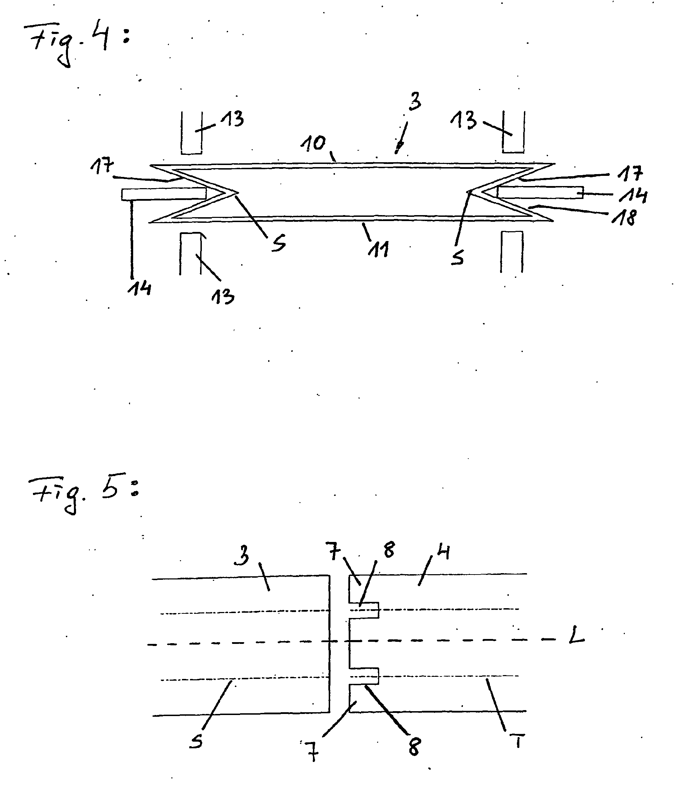

Eine Ausführungsform des erfindungsgemäßen Verfahrens, nämlich jene, bei der die Schnittsetzung beim Endabschnitt 4 so erfolgt, dass jeweils ein in Längsrichtung L des Folienschlauches 5 abstehender Lappen 7 in den Randbereichen des Endabschnittes 4 gebildet wird, der jeweils zwischen die inneren Seitenflächen 17, 18 des Anfangsabschnittes 3 eingeschoben und mit dem Anfangsabschnitt 3 zugfest verbunden wird, wird im folgenden anhand der Fig. 5 bis 11 erläutert.

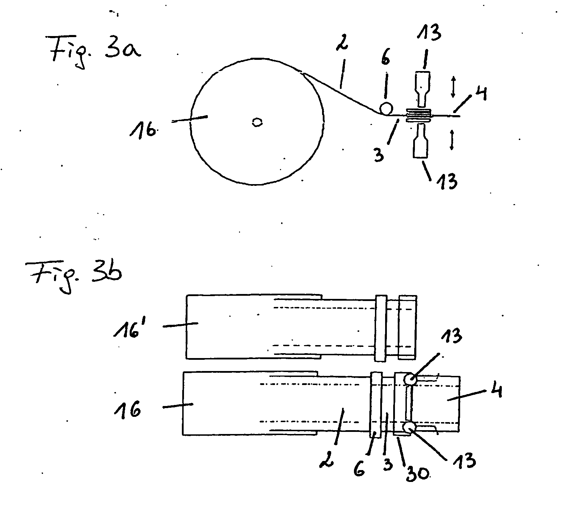

Wie in der Fig. 3 angedeutet ist, erfolgt dies etwa mithilfe einer Verschweißstation 13. Vorzugsweise handelt es sich hierbei um ein Schweißgerät auf der Basis von Ultraschall, wobei die Schweißwerkzeuge 13 auch als Sonotroden bezeichnet werden. Diese Sonotroden 13 werden mit Druck auf die Lappen 7 bzw. die Randbereiche des Endabschnittes 4 aufgesetzt, die mithilfe von Ultraschall in Schwingung versetzt werden. Die Eingangsleistung des Ultraschallschweißgerätes wird dabei insbesondere in Abhängigkeit von der Foliendicke und der Folienbeschaffenheit gewählt, um Probleme mit Abkühlung und Verklebungen zu vermeiden. In den Berührungsbereichen stellt sich daraufhin eine Relativbewegung der Lappen 7 bzw. der Randbereiche des Endabschnittes 4 ein, die zu Wärmeentwicklung und in weiterer Folge zum Plastifizieren, d.h. zum Aufschmelzen des Kunststoffmaterials, führt. Der Kunststoff wird somit mittels mechanischer Schwingungen verbunden.

Es sind prinzipiell auch andere Methoden der Herstellung einer zugfesten Verbindung denkbar, etwa über Klammern oder durch Kleben. So wäre es etwa prinzipiell denkbar, die inneren Oberflächen der Lappen 27 des neuen Folienschlauches 2 mit Klebstoff zu versehen und auf den Endabschnitt 4 des alten Folienschlauches 5 zu pressen. Allerdings müsste hierzu der Klebstoff hinreichend schnell abbinden, was bei gegenwärtig erhältlichen Klebstoffen nicht der Fall ist.

Die Fig. 3b zeigt wiederum die schematische Darstellung gemäß Fig. 3a von oben gesehen. In den zentrischen Bereichen der Folienschläuche 2 und 5 muss keine Verschweißung erfolgen, falls der Anfangsabschnitt 3 über den Endabschnitt 4 gelegt wurde. Dadurch wird ein eingesetzter Dorn 25 vom alten Folienschlauch 5 in den neuen Folienschlauch 2 problemlos übergeführt, auch wenn keine Schweißnaht in den zentrischen Bereichen gesetzt wurde. Es ist unmittelbar ersichtlich, dass dasselbe auch für einen zwischen den inneren Seitenflächen 17, 18, 19, 20 der Seitenfalten geführten Seitenkeil bzw. Schwert 32 gilt. Die Verschweißung in den Randbereichen hat den Vorteil, dass der für die Verschweißung vorgesehene Schweißamboss 14 nicht in die zentrischen Bereiche der Folienschläuche 2, 5 eingeführt werden muss, sondern sich lediglich in den Randbereichen der Folienschläuche 2, 5 erstrecken muss. Er kann etwa zwischen den inneren Seitenflächen 17, 18, 19, 20 der Seitenfalten geführt sein, wo er während der anderen Verfahrensschritte auch verbleiben kann. Die Fig. 4 zeigt zur Verdeutlichung eine Ansicht des Anfangsabschnittes 3 des neuen Folienschlauches 2 entlang der Längsachse L. Hierbei sind insbesondere die relative Anordnung der inneren Seitenflächen 17, 18 mit deren inneren Faltenachse S zu sehen, sowie der zwischen diesen Seitenflächen 17, 18 eingeschobene Schweißamboss 14. Über bzw. unter der äußeren Seitenflächen 10, 11 sind die Schweißköpfe der Schweißanlage 13 zu sehen. Da aber nun das Einschieben eines Schweißambosses in die zentrischen Bereiche der Folienschläuche 2, 5 vor dem Verschweißen entfällt, wird das Verfahren deutlich beschleunigt.

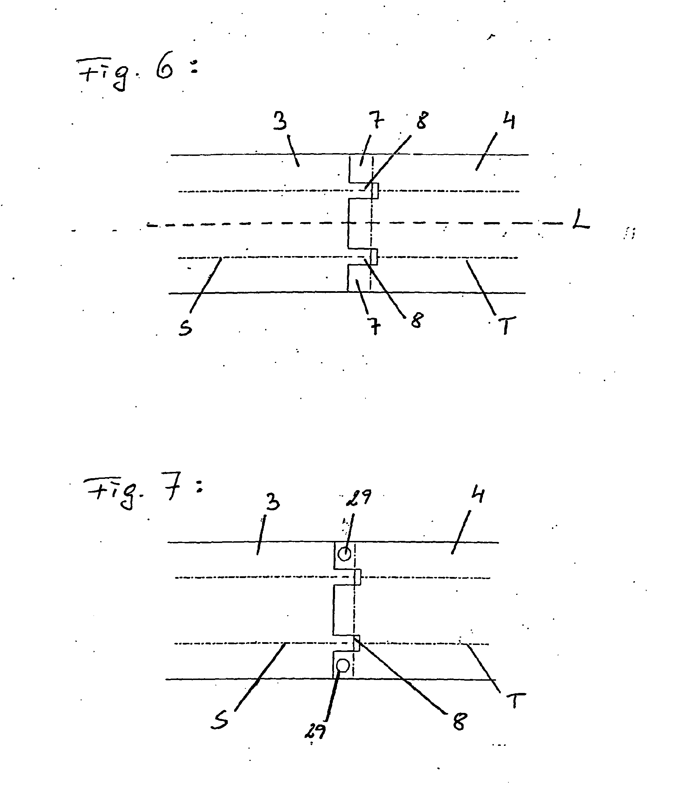

Die Fig. 5 zeigt eine schematische Darstellung von Anfangs- und Endabschnitt 3, 4 von oben gesehen, wobei der Endabschnitt 4 in einem ersten Schritt des erfindungsgemäßen Verfahrens mit Schlitzen 8 in Richtung der Längsachse L versehen wurde, etwa mithilfe eines Schneidelements 12 (siehe sinngemäß etwa Fig. 2a). Die Schnittsetzung erfolgt hierbei in den Randbereichen des Endabschnittes 4 und wird auch als "ausklinken" bezeichnet, wobei jeweils ein in Längsrichtung L des Folienschlauches 5 abstehender Lappen 7 gebildet wird. Die Positionierung der Schlitze 8 ist dabei variabel und wird etwa auf unterschiedliche Breiten des Folienschlauches 4 angepasst werden. Wie in der Fig. 6 dargestellt ist, die wiederum eine schematische Darstellung von Anfangs- und Endabschnitt 3, 4 von oben gesehen zeigt, wird in weiterer Folge der Endabschnitt 4 in den Anfangsabschnitt 3 eingeschoben, und zwar so, dass die Lappen 7 jeweils zwischen die inneren Seitenflächen 17, 18 des Anfangsabschnittes 3 eingeschoben werden. Das gelingt dadurch, indem die jeweilige Faltenachse S des Anfangsabschnittes 3 in den entsprechenden Schlitz 8 eingefädelt wird, wie noch näher ausgeführt werden wird. In einem abschließenden Schritt wird der Anfangsabschnitt 3 mit dem Endabschnitt 4 in deren Randbereichen verschweißt, wobei die Fig. 7 die entsprechenden Schweißstellen 29 andeutet. In den zentrischen Bereichen der Folienschläuche 2 und 5 muss keine Verschweißung erfolgen, da der Anfangsabschnitt 3 den Endabschnitt 4 bei dieser Verbindungsvariante übergreift. Dadurch wird ein eingesetzter Dorn 25 vom alten Folienschlauch 5 in den neuen Folienschlauch 2 problemlos übergeführt, auch wenn keine Schweißnaht in den zentrischen Bereichen gesetzt wurde. Es ist unmittelbar ersichtlich, dass dasselbe auch für einen zwischen den inneren Seitenflächen 17, 18, 19, 20 der Seitenfalten geführten Seitenkeil bzw. Schwert 32 gilt.

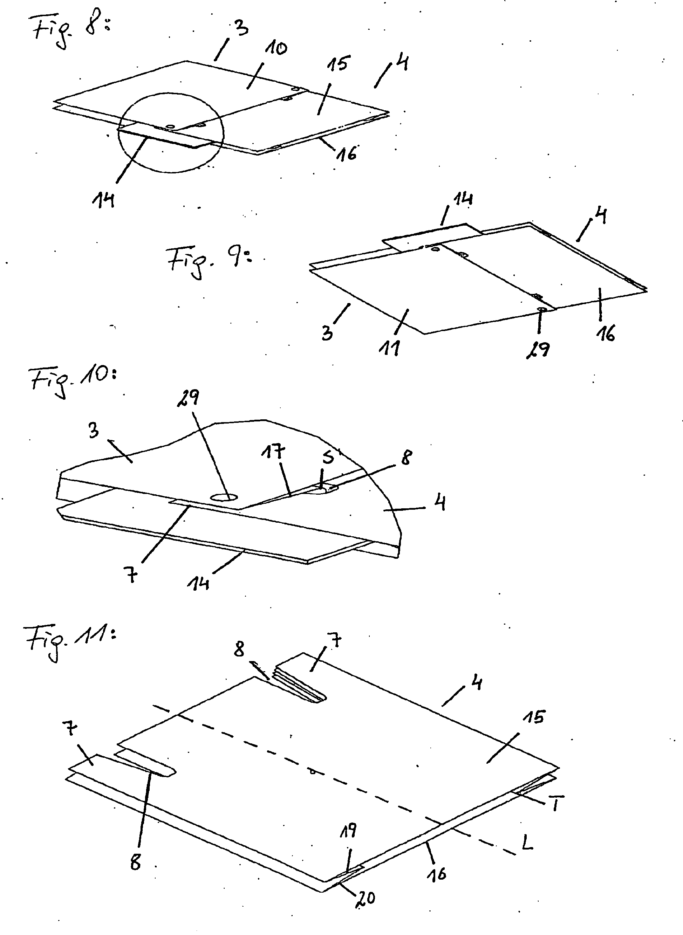

Die Verschweißung in den Randbereichen hat, wie bereits ausgeführt wurde, den Vorteil, dass der für die Verschweißung vorgesehene Schweißamboss 14 nicht in die zentrischen Bereiche der Folienschläuche 2, 5 eingeführt werden muss, sondern sich lediglich in den Randbereichen der Folienschläuche 2, 5 erstrecken muss. Er kann etwa zwischen den inneren Seitenflächen 17, 18, 19, 20 der Seitenfalten geführt sein, wo er während der anderen Verfahrensschritte auch verbleiben kann. Die Fig. 8 bis 10 zeigen zur Verdeutlichung perspektivische Ansichten des Anfangsabschnittes 3 des neuen Folienschlauches 2 und des eingeschobenen Endabschnittes 4 des alten Folienschlauches 5. Hierbei sind insbesondere die relative Anordnung der inneren Seitenflächen 17, 18 des Anfangsabschnittes 3 und der inneren Seitenflächen 19, 20 des Endabschnittes 4 zu sehen, sowie der zwischen diesen Seitenflächen 17, 18, 19, 20 eingeschobene Schweißamboss 14. Über bzw. unter der äußeren Seitenflächen 10, 11, 15, 16 sind die Schweißköpfe der Schweißanlage 13 angeordnet (in den Fig. 8 bis 10 nicht eingezeichnet). Der Schweißamboss 14 greift in die Seitenfalten der Folienschläuche 2, 5 ein und kann während der anderen Verfahrensschritte in dieser Positionierung auch verbleiben. Da aber nun das Einschieben eines Schweißambosses in die zentrischen Bereiche der Folienschläuche 2, 5 vor dem Verschweißen entfällt, wird das Verfahren wiederum deutlich beschleunigt. Die Fig. 9 zeigt eine perspektivische Ansicht gemäß Fig. 7 von unten gesehen. Die Fig. 10 zeigt eine Detailansicht des markierten Bereiches gemäß Fig. 8, wobei insbesondere zu sehen ist, wie die Faltenachse S in den jeweiligen Schlitz 8 eingeführt wird, sodass die inneren Seitenflächen 17, 18 des Anfangsabschnittes 3 die äußeren Seitenflächen 15, 16 des Endabschnittes 4 übergreifen. Es ist wiederum der Schweißamboss 14 zu erkennen, der die Setzung der Schweißstellen 29 unterstützt.

Fig. 11 zeigt zur weiteren Verdeutlichung eine perspektivische Darstellung des Endabschnittes 4, der mit Schlitzen 8 in Richtung der Längsachse L des Folienschlauches 5 versehen wurde. Dadurch werden, wie bereits ausgeführt wurde, Lappen 7 in den Randbereichen des Endabschnittes 4 gebildet.

Gemäß des erfindungsgemäßen Verfahrens können somit die beiden verbundenen Folienschläuche 2 und 5 problemlos durch die weiteren Anlagenabschnitte geführt werden. Insbesondere stellt das erfindungsgemäße Verfahren sicher, dass nach dem Verbinden der beiden Folienschläuche 2 und 5 wieder ein Schlauch entsteht. Das erfindungsgemäße Verfahren kann dabei bei Anlagen mit fliegendem Dorn 25 als auch bei Anlagen mit Keil 28 oder Vakuumsaugern 27 eingesetzt werden.

Mit Hilfe des erfindungsgemäßen Verfahrens können somit längere Stillstandszeiten der Gesamtanlage bei einem Wechsel der Schlauchrolle vermieden werden.

## Patentansprüche

1. Verfahren zum Verbinden eines Anfangsabschnittes (3) eines zulaufenden bandförmigen Folienschlauches (2) mit einem Endabschnitt (4) eines ablaufenden zweiten, sich über nachfolgende Verarbeitungsstationen, insbesondere einer Verpackungsanlage, zumindest teilweise bandförmig erstreckenden Folienschlauches (5), wobei der bandförmige Anfangs- und Endabschnitt (3, 4) jeweils zwei übereinanderliegende, äußere Seitenflächen (10, 11, 15, 16) aufweisen, die in deren Randbereichen jeweils in zwei dazwischen liegende, nach innen gefaltete, innere Seitenflächen (17, 18, 19, 20) übergehen, die eine innen liegende Faltenachse (S, T) bilden, **dadurch gekennzeichnet, dass** in den beiden äußeren Randbereichen des Endabschnittes (4) durch Schnittsetzung jeweils ein Lappen (7) gebildet wird, der mit dem gegenüberliegenden Anfangsabschnitt (3) zugfest verbunden wird, wobei der Anfangsabschnitt (3) den Endabschnitt (4) übergreift, und die Schnittsetzung beim Endabschnitt (4) so erfolgt, dass jeweils ein in Längsrichtung (L) des Folienschlauches (5) abstehender Lappen (7) in den Randbereichen des Endabschnittes (4) gebildet wird, der jeweils zwischen die inneren Seitenflächen (17, 18) des Anfangsabschnittes (3) eingeschoben und mit dem Anfangsabschnitt (3) zugfest verbunden wird.

2. Verfahren nach Anspruch 1, **dadurch gekennzeichnet, dass** die Schnittsetzung beim Endabschnitt (4) so erfolgt, dass in den Randbereichen des Endabschnittes (4) jeweils in Längsrichtung (L) des Folienschlauches (5) verlaufende Schlitze (8) gebildet werden, in die die jeweiligen inneren Seitenflächen (17, 18) des Anfangsabschnittes (3) entlang ihrer Faltenachse (S) eingeführt werden.

3. Verfahren nach Anspruch 1 oder 2, **dadurch gekennzeichnet, dass** die Breite der Lappen (7) der Breite der jeweiligen inneren Seitenflächen (17, 18) des Anfangsabschnittes (3) im wesentlichen entspricht.

4. Verfahren nach einem der Ansprüche 1 bis 3, **dadurch gekennzeichnet, dass** die zugfeste Verbindung der Anfangs- und Endabschnitte (3, 4) der Folienschläuche (2, 5) durch Verschweißen gebildet wird.

5. Verfahren nach Anspruch 4, **dadurch gekennzeichnet, dass** das Verschweißen mittels Ultraschall erfolgt.

6. Verfahren nach einem der Ansprüche 1 bis 5, **dadurch gekennzeichnet, dass** vor dem Übereinanderlegen von Anfangs- und Endabschnitt (3, 4) der Anfangsabschnitt (3) mittels Unterdruck oder elektrostatischer Verfahren aufgeweitet wird.

7. Verfahren nach einem der Ansprüche 4 bis 6, **dadurch gekennzeichnet, dass** zum Verschweißen der Anfangs- und Endabschnitte (3, 4) der Folienschläuche (2, 5) seitlich jeweils ein Schweißamboss (14) zwischen die inneren Seitenflächen (17, 18, 19, 20) eingeschoben wird, auf dem jeweils ein Lappen (7, 27) sowie jeweils ein Randbereich des Anfangs- oder Endabschnittes (3, 4) aufgelegt und miteinander verschweißt werden.

8. Verpackungsanlage mit einem Rollenträger (1), auf dem ein Folienschlauch (2, 5) aufgewickelt ist, einer Positionier- und Spannstation (6), die den Folienschlauch (2, 5) vom Rollenträger (1) abwickelt und nachfolgenden Anlagenabschnitten zuführt, einer Verpackungseinheit (22) zum Verarbeiten eines Folienschlauchabschnittes sowie einer Fördereinrichtung (21) zum Abtransport verpackter Güter, **dadurch gekennzeichnet, dass** zur Durchführung des Verfahrens nach einem der Ansprüche 1 bis 7 zwischen der Positionier- und Spannstation (6) sowie der Verpackungseinheit (22) zumindest eine Schneidvorrichtung (12, 28) zur Bildung jeweils eines in Längsrichtung (L) des ablaufenden Folienschlauches (5) abstehenden Lappens (7) in den Randbereichen des Endabschnittes (4) und eine Verschweißstation (13) zur Verbindung des zwischen die inneren Seitenflächen (17, 18) des Anfangsabschnittes (3) eingeschobenen abstehenden Lappens (7) mit dem Anfangsabschnitt (3) des zulaufenden Folienschlauches (2) angeordnet ist.

9. Verpackungsanlage nach Anspruch 8, **dadurch gekennzeichnet, dass** es sich bei der Verschweißstation (13) um eine Ultraschall-Schweißanlage handelt.

10. Verpackungsanlage nach Anspruch 8, **dadurch gekennzeichnet, dass** zwischen der Positionier- und Spannstation (6) sowie der Verpackungseinheit (22) Saugschwenker (30) angeordnet sind.

## Claims

1. A method for joining an initial section (3) of a fed, band-like film tube (2) with an end section (4) of a leaving, second film tube (5) extending over subsequent processing stations, especially a packaging system, in an at least partly band-like manner, with the band-like initial and end section (3, 4) each having two mutually superimposed outer lateral surfaces (10, 11, 15, 16) which each converge in their boundary regions into two interposed, inwardly folded inner lateral surfaces (17, 18, 19, 20) which thus form an inwardly situated fold axis (S, T), **characterized in that** in the two outer boundary regions of the end section (4) a tab (7) each is formed by placing a cut, which tab is joined in a tension-proof manner with the opposite initial section (3), with the initial section (3) overlapping the end section (4), and the placement of the cut on the end section (4) is carried out in such a way that a tab (7) each which projects in the longitudinal direction (L) of the film tube (5) is formed in the boundary regions of the end section (4), which tab is inserted between the inner lateral surfaces (17, 18) of the initial section (3) and is joined to the initial section (3) in a tension-proof way.

2. A method according to claim 1, **characterized in that** the placement of the cut in the end section (4) occurs in such a way that slots (8) are formed in the boundary regions of the end section (4) which each extend in the longitudinal direction (L) of the film tube (5) into which the respective inner side surfaces (17, 18) of the initial section (3) are inserted along their fold axis (S).

3. A method according to claim 1 or 2, **characterized in that** the width of the tabs (7) corresponds substantially to the width of the respective inner side surfaces (17, 18) of the initial section (3).

4. A method according to one of the claims 1 to 3, **characterized in that** the tension-proof connection of the initial and end sections (3, 4) of the film tubes (2, 5) is formed by welding.

5. A method according to claim 4, **characterized in that** the welding occurs by means of ultrasonic sound.

6. A method according to one of the claims 1 to 5, **characterized in that** the initial section (3) is widened by means of negative pressure or electrostatic methods before the initial and end section (3, 4) are placed above one another.

7. A method according to one of the claims 4 to 6, **characterized in that** for welding the initial and end sections (3, 4) of the film tubes (2, 5) a welding anvil (14) each is inserted laterally between the inner side surfaces (17, 18, 19, 20) on which a tab (7, 27) each and a boundary region each of the initial and end section (3, 4) are placed and welded together.

8. A packaging system with a reel (1) on which a film tube (2, 5) is wound up, a positioning and tensioning station (6) which unwinds the film tube (2, 5) from the reel (1) and supplies the same to subsequent sections of the system, a packaging unit (22) for processing a film tube section and a conveying device (21) for removing packaged goods, **characterized in that** for performing the method according to one of the claims 1 to 7 at least one cutting apparatus (12, 28) for forming a tab (7) each which projects in the longitudinal direction (L) of the leaving film tube (5) in the boundary regions of the end section (4) and a welding station (13) for joining the projecting tab (7) inserted between the inner lateral surfaces (17, 18) of the initial section (3) with the initial section (3) of the fed film tube (2) is arranged between the positioning and tensioning station (6) and the packaging unit (22).

9. A packaging system according to claim 8, **characterized, in that** the welding station (13) concerns an ultrasonic welding station.

10. A packaging system according to claim 8, **characterized in that** pivoting suction means (30) are arranged between the positioning and tensioning station (6) and the packaging unit (22).

## Revendications

1. Procédé pour relier une partie de début (3) d'un tube de film (2) amené en forme de bande à une partie de fin (4) d'un deuxième tube de film (5) au moins partiellement en forme de bande qui s'achève, s'étendant sur des postes de traitement suivants, en particulier dans une installation d'emballage, dans lequel les parties de début et de fin (3, 4) en forme de bande présentent chacune deux surfaces latérales extérieures (10, 11, 15, 16) superposées qui sont suivies dans leurs zones de bord de deux surfaces latérales intérieures (17, 18, 19, 20) repliées vers l'intérieur et situées entre elles, qui forment un axe de pliage (S, T) situé à l'intérieur, **caractérisé en ce que** la découpe forme dans chacune des deux zones de bord extérieures de la partie de fin (4) une patte (7) qui est reliée de manière résistante à la traction à la partie de début (3) qui lui fait face, la partie de début (3) chevauchant la partie de fin (4), et la partie de fin (4) est découpée de façon à former une languette (7) dépassant dans le sens longitudinal (L) du tube de film (5) dans les zones de bord de chaque partie de fin (4), qui est inséré entre les surfaces latérales intérieures (17, 18) de la partie de début (3) et relié de manière résistante à la traction à la partie de début (3).

2. Procédé selon la revendication 1, **caractérisé en ce que** la découpe de la partie de fin (4) est réalisé de telle manière à former dans les zones de bord de chaque partie de fin (4) des fentes (8) orientés dans le sens longitudinal (L) du tube de film (5), dans lesquelles sont introduites les surfaces latérales intérieures (17, 18) correspondante de la partie de début (3) le long de leur axe de pliage (S).

3. Procédé selon la revendication 1 ou 2, **caractérisé en ce que** la largeur des pattes (7) correspond pour l'essentiel à la largeur des surfaces latérales intérieures (17, 18) correspondantes de la partie de début (3).

4. Procédé selon l'une des revendications 1 à 3, **caractérisé en ce que** l'assemblage résistant à la traction entre les parties de début et de fin (3, 4) des tubes de film (2, 5) est formé par soudage.

5. Procédé selon la revendication 4, **caractérisé en ce que** le soudage est réalisé au moyen d'ultrasons.

6. Procédé selon l'une des revendications 1 à 5, **caractérisé en ce qu'avant** la superposition des parties de début et de fin (3, 4), la partie de début (3) est élargie au moyen d'une dépression ou d'un procédé électrostatique.

7. Procédé selon l'une des revendications 4 à 6, **caractérisé en ce que** pour souder les parties de début et de fin (3, 4) des tubes de film (2, 5), une enclume de soudage (14) est introduite par le côté entre les surfaces latérales intérieures (17, 18, 19, 20) et une patte (7, 27) et une zone de bord des parties de début ou de fin (3, 4) sont posées dessus et soudées ensemble.

8. Installation d'emballage avec un support de rouleau (1) sur lequel est enroulé un tube de film (2, 5), avec un poste de positionnement et de mise en tension (6) qui déroule le tube de film (2, 5) du support de rouleau (1) et l'amène aux sections suivantes de l'installation, une unité d'emballage (22) pour la mise en oeuvre d'une partie du tube de film et une installation de transport (21) pour l'évacuation des marchandises emballées, **caractérisée en ce qu'il** est prévu pour la mise en oeuvre du procédé selon l'une des revendications 1 à 7 entre le poste de positionnement et de mise en tension (6) et l'unité d'emballage (22) au moins un dispositif de découpe (12, 28) destiné à former une patte (7) dépassant dans le sens longitudinal (L) du tube de film (5) dévidé dans chaque zone de bord de la partie de fin (4) et un poste de soudage (13) pour assembler la patte (7) insérée entre les surfaces latérales intérieures (17, 18) de la partie de début (3) avec la partie de début (3) du tube de film (2) amené.

9. Installation d'emballage selon la revendication 8, **caractérisée en ce que** le poste de soudage (13) est une installation de soudage par ultrasons.

10. Installation d'emballage selon la revendication 8, **caractérisé en ce que** des buses d'aspiration pivotantes (30) sont disposées entre le poste de positionnement et de mise en tension (6) et l'unité d'emballage (22).
